# FASCICULE DE BREVET EUROPEEN

(11) **EP 2 497 669 B1**
(45) Date de publication et mention de la délivrance du brevet: **20.01.2016**
(21) Numéro de dépôt: 12305288.8
(22) Date de dépôt: 12.03.2012
(51) Int. Cl.: B60K 26/02, B60W 30/18, B60L 15/20, B60W 10/08

(54) **Dispositif de commande d'un véhicule automobile à moteur électrique**
Steuerhebel für ein elektrisches Fahrzeug
Manual control device for an electric vehicle

(30) Priorité: 10.03.2011 FR 1151957
(43) Date de publication de la demande: 12.09.2012
(73) Titulaire: Dura Automotive Systems SAS, 91570 Bièvres (FR)
(72) Inventeur: Durand, Eric, 78430 Louveciennes (FR)
(74) Mandataire: Cabinet Laurent & Charras

(56) Documents cités:
- DE-A1- 3 906 965
- FR-A1- 2 020 675
- GB-A- 830 544
- US-A- 4 419 610
- Daytona GT: "Owner's Manual", , 18 octobre 2010 (2010-10-18), XP055009781, Extrait de l'Internet: URL:http://www.scooter.com/files/Daytona_3 4_GT_Manual.pdf [extrait le 2011-10-18]

## Description

L'invention se rattache au secteur technique des véhicules automobiles à moteur électrique.

Plus particulièrement, l'invention concerne un dispositif de commande de ce type de véhicule.

La tendance actuelle eu égard aux normes environnementales est d'équiper les véhicules automobiles d'un moteur électrique en lieu et place d'un moteur thermique.

De manière connue pour un homme du métier, dans un moteur électrique notamment pour véhicule, un électro-aimant est alimenté par l'énergie fournie par une batterie afin de mettre en rotation un aimant. L'architecture de la chaine de traction est particulièrement simple, étant donné qu'il n'est pas nécessaire de faire appel à une boîte de vitesses ou à des composants, afin de convertir le mouvement vertical des pistons en mouvement rotatif. L'axe du moteur tourne directement sur l'axe des roues. Bien évidemment, le moteur est asservi à une électronique de puissance afin notamment de convertir et délivrer l'énergie dont le véhicule a besoin. Un chargeur adapte le courant apporté par une source d'alimentation électrique tandis qu'un onduleur convertit le courant continu fourni par la batterie en courant alternatif pour le fonctionnement du moteur. Un boîtier d'interconnexion distribue l'énergie à l'intensité souhaitée soit au moteur électrique soit à la batterie, soit aux composants électroniques en fonction de leurs besoins et de la phase de roulage du véhicule.

Comme indiqué, dans ce type de véhicule il n'y a pas de commande de boite de vitesses, mais seulement un levier pour commander le moteur électrique dans un sens de rotation correspondant, par exemple, à la marche avant et, dans un sens de rotation inverse, correspondant à la marche arrière. L'utilisation d'un levier, pour la sélection des deux modes nécessite de lâcher les mains du volant pour changer de mode et occupe un certain espace, par exemple au niveau d'une console.

Pour remédier à ces inconvénients, il est connu d'utiliser des palettes disposées au niveau du volant. Toutefois, ces palettes, dans l'état actuel de la technique, ne sont utilisées que pour le passage et la sélection d'une boite de vitesses d'un véhicule à moteur thermique. Cet état de la technique peut être illustré, par exemple, par les brevets EP1180718 et EP 1990560.

A partir de cet état de la technique, le problème que se propose de résoudre l'invention est d'utiliser des palettes pour piloter un moteur électrique d'un véhicule automobile avec de manière classique, les modes neutre (N), marche avant (D) et marche arrière (R).

Pour résoudre un tel problème, il a été conçu et mis au point un dispositif de commande d'un véhicule automobile à moteur électrique, qui comprend d'un côté du volant, une palette assujettie à des moyens pour assurer l'entrainement du moteur selon un sens de rotation correspondant à la marche avant (D) et, de l'autre côté du volant, une autre palette assujettie à des moyens pour assurer l'entrainement du moteur selon un sens de rotation inverse du précédent correspondant à la marche arrière (R).

Pour résoudre le problème posé d'obtenir les différents modes nécessaires à la commande d'un véhicule électrique, chaque palette présente un état stable, lorsque ladite palette est relâchée et un état instable, lorsque ladite palette est tirée, la sélection de la marche arrière ou de la marche avant, s'effectuant par une ou deux actions de tirer sur la palette correspondante.

Suivant d'autres caractéristiques, le fonctionnement des palettes est asservi par un automate présentant 3 états (Marche Avant, Neutre et Marche Arrière) et des transitions permettant via, des actions sur ladites palettes et des conditions véhicules, de passer d'un état à l'autre.

En considérant l'utilisation de palettes pour la commande d'un moteur électrique de véhicule automobile, les deux palettes sont assujetties à une unité centrale de commande où sont également assujetties une pédale de frein et éventuellement une pédale d'accélération, ladite unité centrale permettant un affichage et la commande des différents fonctionnement d'un véhicule et est asservie :
▪ à un ensemble de gestion d'une batterie lui-même relié à un chargeur et à la batterie ;
▪ directement au chargeur ;
▪ à un ensemble de contrôle du moteur lui-même connecté à un inverseur assujetti au moteur ;

Selon une autre caractéristique les palettes utilisent la mise en oeuvre de deux résistances pour modifier la tension analogique vue par l'unité centrale traitant l'information palette.

La décomposition fonctionnelle, en considérant l'utilisation de palettes pour la commande du véhicule électrique, est la suivante. :
▪ acquisition de l'état palette droite et gauche pour obtenir une valeur analogique et la transformer en une valeur logique OFF ou ON ou Invalide ;
▪ filtrage de la valeur logique de la palette droite et filtrage de la valeur logique de la palette gauche;
▪ à partir de l'état filtré de la palette droite et de la palette gauche : gestion du premier appui;
▪ validation de l'état filtré palette
▪ à partir de la gestion du premier appui et de la surveillance de l'état des palettes dans les bornes, commande des palettes droite ou gauche par le conducteur (Pas de commande ou Tiré palette gauche ou Tiré palette droite);
▪ gestion du mode sélectionné (automate);
▪ pilotage de l'inverseur ;

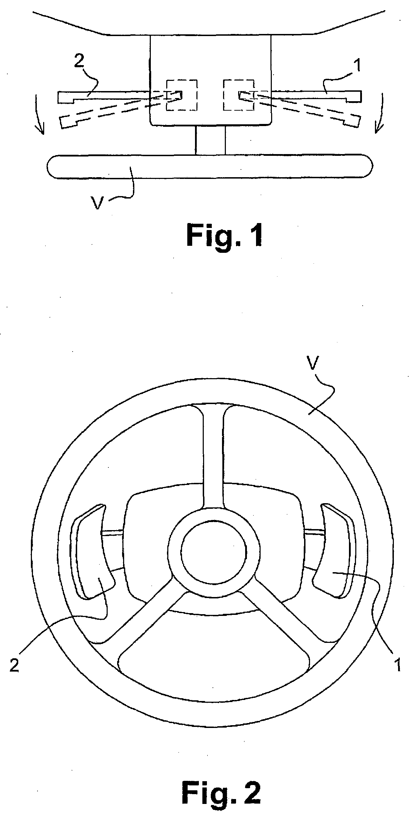

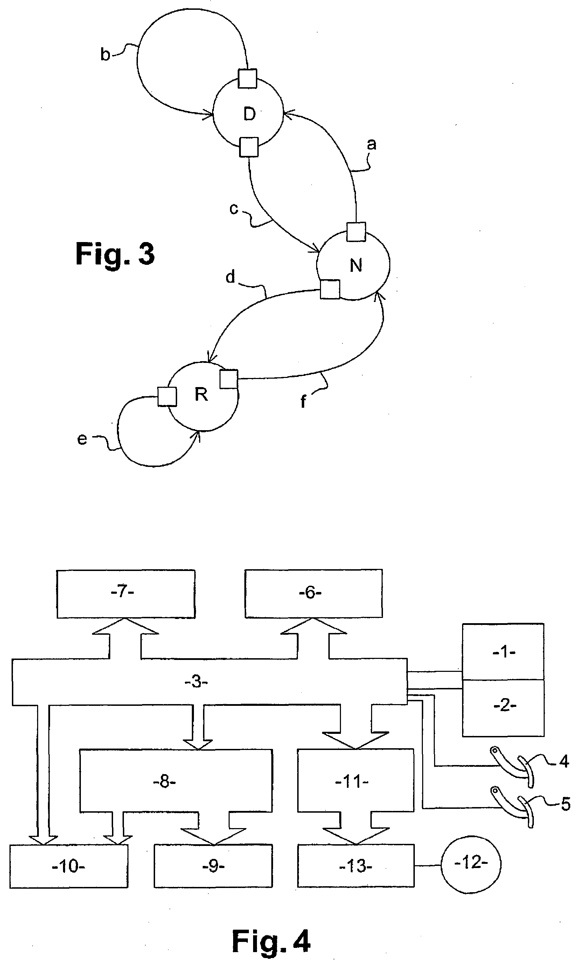

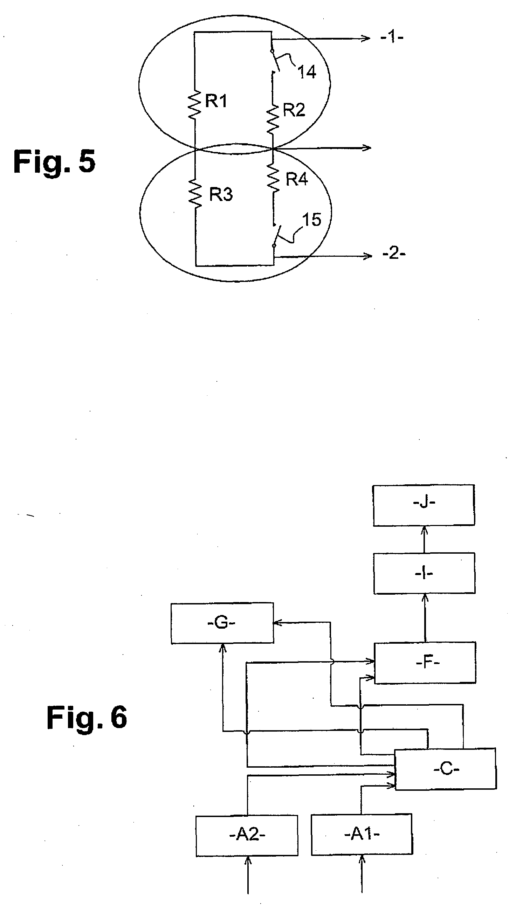

L'invention est exposée ci-après plus détail à l'aide des figures des dessins annexés, dans lesquels :
▪ La figure 1 est une vue de dessus à caractère schématique montrant le montage des palettes de chaque côté du volant pour la commande du moteur électrique.
▪ La figure 2 est une vue de face correspondant à la figure 1.
▪ La figure 3 montre la machine d'état de la sélection du mode en fonction de l'action exercée sur les palettes.
▪ La figure 4 montre l'architecture d'un véhicule avec la sélection des différents modes à partir des palettes.
▪ La figure 5 montre le schéma électronique des palettes.
▪ La figure 6 est un grafcet de la décomposition fonctionnelle du dispositif

Selon l'invention, l'entrainement du moteur électrique du véhicule automobile pour obtenir les différents modes (neutre (N), marche avant (D), marche arrière (R)), s'effectue au moyen de deux palettes (1) et (2) accessibles par le conducteur, sans lâcher le volant (V). D'un côté du volant, la palette (1) est assujettie à des moyens pour assurer l'entrainement du moteur selon un sens de rotation correspondant à la marche avant (D). De l'autre côté du volant, la palette (2) est assujettie à des moyens pour assurer l'entrainement du moteur selon un sens de rotation inverse du précédent, correspondant à la marche arrière (R).

Les palettes (1) et 2 présentent un état stable lorsqu'elles sont relâchées, et un état instable lorsqu'elles sont tirées. Comme indiqué, la sélection de la marche arrière s'effectue par une ou deux actions de tirer de la palette (2) tandis que la sélection de la marche avant s'effectue par une ou deux actions de tirer de la palette (1) A noter que l'état stable des palettes (1) et (2) correspondant à un état où l'on garde le mode sélectionné, à savoir marche arrière (R) ou marche avant (D) ou neutre (N).

En résumé, si le mode est (D), une action de tirer sur la palette gauche (2) permet d'aller en mode (N), puis une deuxième action de tirer sur la palette gauche (2) permet d'aller en mode (R). Si le mode est (R), une action de tirer sur la palette droite (1) permet d'aller au mode (N), puis une deuxième action de tirer permet d'aller en mode (D).

Le fonctionnement des palettes (1) et (2) est asservi par un automate présentant les 3 états (Marche Avant, Neutre et Marche Arrière) et des transitions permettant via des actions sur ladites palettes et des conditions véhicules, de passer d'un état à l'autre.

Les palettes (1) et (2) peuvent être assujetties à un afficheur pour indiquer le mode sélectionné (neutre (N), marche avant (D), marche arrière (R)).

Il résulte de ces dispositions que le conducteur utilise sa main droite pour actionner la palette (1) correspondant au mode marche avant (D) et sa main gauche pour actionner la palette (2) correspondant au mode marche arrière (R).

La machine d'état correspondante est illustrée figure 3, dans laquelle (N) représente le mode neutre, (D) le mode marche avant, et (R) le mode marche arrière.
(a) correspond à l'action de tirer la palette droite (1), la vitesse du véhicule étant égale ou inférieure à 5 km/h, le conducteur exerçant un appui le frein ;
(b) correspondant à l'action de tirer la palette droite (1),
(c) correspondant à l'action de tirer la palette gauche (2), la vitesse du véhicule étant par exemple inférieure ou égale à 5 km/h, un appui étant exercé sur le frein (appui frein optionnel);
(d) correspondant à l'action de tirer la palette gauche (2) la vitesse du véhicule étant, par exemple, inférieure ou égale à 5 km/h et un appui étant exercé sur le frein (appui frein optionnel);
(e) correspond à l'action de tirer la palette gauche (2) ;
(f) correspondant à l'action de tirer la palette droite, la vitesse du véhicule étant par exemple inférieure ou égale à 5 km/h, un appui étant exercé sur la pédale de frein. (appui frein optionnel);

L'architecture d'un véhicule avec une sélection des modes marche avant (D), neutre (N), marche arrière (R) à partir des deux palettes (1) et (2) est schématisé figure 4.

Les deux palettes (1) et (2) sont assujetties à l'automate ou unité centrale de commande (3) où sont également assujetties une pédale d'accélération (4) et une pédale de frein (5). L'unité centrale (3) permet un affichage (6) et la commande des différentes fonctions (7) du véhicule. En outre, cette unité centrale (3) est assujettie à un ensemble (8) de gestion d'une batterie (9) lui-même relié à la batterie et à un chargeur (10). L'unité centrale (3), reliée directement au chargeur (10), est également reliée à un ensemble (11) de contrôle du moteur (12) lui-même connecté à un inverseur (13).

Chaque palette (1) et (2) utilise la mise en parallèle de deux résistances pour modifier la tension analogique détectée par l'unité centrale traitant l'information des palettes. Comme le montre la figure 5, la palette (1), par l'intermédiaire d'un contacteur (14) utilise la mise en parallèle de deux résistances (R1) et (R2). La palette gauche (2), par l'intermédiaire d'un contacteur (15), utilise la mise en parallèle de deux résistances (R3) et (R4).

La décomposition fonctionnelle est illustrée figure 6, la mise en oeuvre étant effectuée sur l'unité de contrôle et de commande du véhicule électrique. Dans ce grafcet, les différents blocs correspondent aux fonctions suivantes :
▪ (A1) acquisition de l'état de la palette droite (1) et (A2) acquisition de l'état de la palette gauche (2), à partir des signaux électriques correspondants (ces acquisitions permettant d'avoir en sortie une information dite logique de l'état des palettes à savoir OFF (palette non appuyée) ou ON (palette tirée) ou Invalide (problème sur la palette)) ;
▪ (C) gestion filtrage (en sortie, présences de deux informations : valeur logique palette droite filtrée et valeur logique palette gauche filtrée);
▪ à partir de l'état filtré par la palette droite et gauche, gestion du premier appui (F) permettant de construire une information logique : pas d'appui sur les palettes ou appui sur la palette droite ou appui sur palette gauche et surveillance (G) de l'état des palettes (1) et (2) dans les bornes ;
▪ à partir de la gestion du premier appui (F) gestion des modes sélectionnés (I) à savoir Marche avant (D) ou neutre (N) ou marche arrière (R);
▪ (J) pilotage de l'inverseur ;

A noter que la fonction gestion premier appui (F) a pour objectif de gérer des appuis simultanés sur les palettes (1) et (2). La fonction (G) de surveillance de l'état des palettes dans les bornes, à pour objectif de surveiller que la valeur de la palette droite et de la palette gauche, sont dans des zones valides (ON ou OFF) et non pas invalides. La détection d'une valeur invalide peut éventuellement être utilisée pour remonter un défaut au conducteur et/ou appliquer un mode dégradé.

Les avantages ressortent bien de la description, en particulier on souligne et on rappelle :
- la suppression d'un levier pour la sélection des modes marche avant, neutre, marche arrière, dégageant ainsi l'habitacle ;
- possibilité de changer de modes sans quitter les mains du volant ;
- discrimination du passage de la marche avant et de la marche arrière, en utilisant, pour chaque mode, soit la main droite soit la main gauche ;
- diminution des couts.

## Revendications

1. Dispositif de commande d'un véhicule automobile à moteur électrique **caractérisé en ce qu'**il comprend, d'un côté d'un volant (V), une palette (1) assujettie à des moyens pour assurer l'entrainement du moteur selon un sens de rotation correspondant à la marche avant (D) et de l'autre côté du volant (V), une autre palette (2) assujettie à des moyens pour assurer l'entrainement du moteur selon un sens de rotation inverse du précédent correspondant à la marche arrière (R).

2. Dispositif selon la revendication 1 **caractérisé en ce que** chaque palette (1) et (2) présente un état stable, lorsque ladite palette est relâchée et un état instable, lorsque ladite palette est tirée, la sélection de la marche arrière ou de la marche avant s'effectuant par une ou deux actions de tirer sur la palette correspondante.

3. Disposition selon l'une quelconque des revendications 1 et 2, **caractérisé en ce que** le fonctionnement des palettes (1) et (2) est asservi par un automate présentant 3 états (Marche Avant, Neutre et Marche Arrière) et des transitions permettant, via des actions sur ladite palette et des conditions véhicules, de passer d'un état à l'autre.

4. Dispositif selon l'une quelconque des revendications 1 à 3, **caractérisé en ce que** les palettes (1) et (2) sont assujetties à un afficheur pour indiquer le mode sélectionné.

5. Dispositif selon l'une quelconque des revendications 1 à 4, **caractérisé en ce que** les deux palettes (1) et (2) sont assujetties à une unité centrale de commande (3) où sont également assujetties une pédale d'accélération (4) et une pédale de frein (5), ladite unité centrale (3) permettant un affichage et la commande des différents fonctions d'un véhicule et est asservis :
▪ à un ensemble (8) de gestion d'une batterie (9) lui-même relié à un chargeur (10) et à la batterie ;
▪ directement au chargeur (10).
▪ à un ensemble (11) de contrôle du moteur (12) lui-même connecté à un inverseur (13) assujetti au moteur ;

6. Dispositif selon l'une quelconque des revendications 1 à 5, **caractérisé en ce que** les palettes (1) et (2) utilisent la mise en parallèles de deux résistances pour modifier la tension analogique détectée par l'unité centrale traitant l'information palettes.

7. Dispositif selon l'une quelconque des revendications 1 à 6, **caractérisé en ce que** l'algorithme de la décomposition fonctionnelle à partir des palettes est le suivant :
▪ (A1) acquisition de l'état de la palette droite (1) et (A2) acquisition de l'état de la palette gauche (2), à partir des signaux électriques correspondants (ces acquisitions permettant d'avoir en sortie une information dite logique de l'état des palettes à savoir OFF (palette non appuyée) ou ON (palette tirée) ou Invalide (problème sur la palette)) ;
▪ (C) gestion filtrage (en sortie, présences de deux informations : valeur logique palette droite filtrée et valeur logique palette gauche filtrée);
▪ à partir de l'état filtré par la palette droite et gauche gestion premier appui (F) permettant de construire une information logique : pas d'appui sur les palettes ou appui la palette droite ou appui sur la palette gauche et surveillance (G) de l'état des palettes (1) et (2) dans les bornes ;
▪ à partir de la gestion de premier appui (F) gestion des modes sélectionné (I) à savoir, marche avant (D) ou neutre (N) ou marche arrière (R) ;
▪ (J) pilotage de l'inverseur ;

## Patentansprüche

1. Vorrichtung zur Steuerung eines Kraftfahrzeugs mit Elektromotor, **dadurch gekennzeichnet, dass** die Vorrichtung auf der einen Seite eines Lenkrads (V) eine Schaltwippe (1) enthält, welcher Mittel zum Antrieb des Motors in einer dem Vorwärtsgang (D) entsprechenden Drehrichtung zugeordnet sind und auf der anderen Seite des Lenkrads (V) eine weitere Schaltwippe (2) enthält, welcher Mittel zum Antrieb des Motors in einer dem Rückwärtsgang (R) entsprechenden Drehrichtung zugeordnet sind.

2. Vorrichtung nach Anspruch 1, **dadurch gekennzeichnet, dass** jede Schaltwippe (1) und (2) einen stabilen Zustand aufweist, wenn die Schaltwippe losgelassen wird und einen instabilen Zustand aufweist, wenn die Schaltwippe herangezogen wird, wobei die Auswahl des Vorwärts- oder Rückwärtsgangs durch einmaliges bzw. zweimaliges Heranziehen der jeweiligen Schaltwippe erfolgt.

3. Vorrichtung nach einem der Ansprüche 1 oder 2, **dadurch gekennzeichnet, dass** der Betrieb der Schaltwippen (1) und (2) von einem Automaten gesteuert wird, der 3 Zustände (Vorwärtsgang, Neutral und Rückwärtsgang) und Übergänge aufweist, über die durch Betätigen der Schaltwippe und durch Fahrzeugvorgaben von einem Zustand zum anderen übergegangen werden kann.

4. Vorrichtung nach einem der Ansprüche 1 bis 3, **dadurch gekennzeichnet, dass** die Schaltwippen (1) und (2) einem Display zur Anzeige der gewählten Betriebsart zugeordnet sind.

5. Vorrichtung nach einem der Ansprüche 1 bis 4, **dadurch gekennzeichnet, dass** die beiden Schaltwippen (1) und (2) einer zentralen Steuereinheit (3) zugeordnet sind, der darüber hinaus ein Gaspedal (4) und ein Bremspedal (5) zugeordnet sind, wobei die zentrale Steuereinheit (3) der Anzeige und Steuerung der verschiedenen Funktionen eines Fahrzeugs dient und gesteuert wird:
▪ von einer Baugruppe (8) zur Verwaltung einer Batterie (9), die selbst an ein Ladegerät (10) und an die Batterie angeschlossen ist;
▪ direkt vom Ladegerät (10).
▪ von einer Baugruppe (11) zur Kontrolle des Motors (12), die selbst an einen dem Motor zugeordneten Umrichter (13) angeschlossen ist.

6. Vorrichtung nach einem der Ansprüche 1 bis 5, **dadurch gekennzeichnet, dass** die Schaltwippen (1) und (2) die Parallelschaltung von zwei Widerständen nutzen, um die von der zentralen Steuereinheit zur Verarbeitung der Schaltwippeninformation erkannte Analogspannung zu verändern.

7. Vorrichtung nach einem der Ansprüche 1 bis 6, **dadurch gekennzeichnet, dass** folgender Algorithmus zur funktionellen Aufgliederung durch die Schaltwippen angewendet wird:
▪ (A1) Zustandserfassung der rechten Schaltwippe (1) und (A2) Zustandserfassung der linken Schaltwippe (2) durch entsprechende elektrische Signale (über diese Erfassungen erhält man am Ausgang eine so genannte logische Information über den Zustand der Schaltwippen, und zwar OFF (nicht betätigte Schaltwippe) oder ON (herangezogene Schaltwippe) oder Ungültig (Schaltwippe fehlerhaft));
▪ (C) Filterungsverwaltung (Vorhandensein von zwei Informationen am Ausgang: gefilterter logischer Wert rechte Schaltwippe und gefilterter logischer Wert linke Schaltwippe);
▪ ausgehend vom gefilterten Zustand durch die rechte und linke Schaltwippe, Verwaltung der ersten Betätigung (F) zum Aufbau einer logischen Information: keine Betätigung der Schaltwippen oder Betätigung der rechten Schaltwippe oder Betätigung der linken Schaltwippe und Überwachung (G) des Zustands der Schaltwippen (1) und (2) an den Anschlüssen;
▪ ausgehend von der Verwaltung der ersten Betätigung (F), Verwaltung der ausgewählten Betriebsarten (I), und zwar Vorwärtsgang (D) oder Neutralstellung (N) oder Rückwärtsgang (R);
▪ (J) Steuerung des Umrichters.

## Claims

1. A control device for a motor vehicle with an electric motor **characterized in that** it comprises, on one side of a flywheel (V), a pallet (1) connected to means for providing the motor drive according to a direction of rotation corresponding to forward travel (D) and on the other side of the flywheel (V), another pallet (2) connected to means for driving the motor in a direction of rotation opposite to the previous one, corresponding to reverse travel (R).

2. Device according to claim 1 **characterized in that** each pallet (1) and (2) has a stable state when said pallet is released and an unstable state when said pallet is pulled, the selection of the reverse or forward travel being performed by one or two pulling actions on the corresponding pallet.

3. Device according to any one of claims 1 and 2, **characterized in that** the operation of the pallets (1) and (2) is controlled by a controller having three state (Forward, Neutral and Reverse) and transitions enabling, through actions on said pallet and vehicle conditions, to switch from one state to another.

4. Device according to any one of claims 1 to 3, **characterized in that** the two pallets (1) and (2) are connected to a display to indicate the selected mode.

5. Device according to any one of claims 1 to 4, **characterized in that** the two pallets (1) and (2) are connected to a central control unit (3) to which are also connected an acceleration pedal (4) and a brake pedal (5), said central unit (3) enabling to display and control the different functions of a vehicle, and is connected:
▪ to a set (8) for managing a battery (9,) itself connected to a charger (10) and to the battery;
▪ directly to the charger (10);
▪ to a set (11) for checking the motor (12) itself connected to an inverter (13) connected to the engine.

6. Device according to any one of claims 1 to 5, **characterized in that** the pallets (1) and (2) use the paralleling of two resistors to change the analog voltage detected by the central unit processing the pallet information.

7. Device according to any one of claims 1 to 6, **characterized in that** the functional decomposition algorithm from the pallets is as follows:
▪ (A1) acquisition of the state of the right pallet (1) and (A2) acquisition of the state of the left pallet (2), from the corresponding electrical signals (these acquisitions enabling to have output information called logic of the pallet state, i.e. OFF (not supported pallet) or ON (pulled pallet) or Invalid (problem on the pallet));
▪ (C) filtering management (at the output, presence of two informations: filtered right pallet logical value and filtered left pallet logical value) ;
▪ from the filtered state of the of right and left pallet, managing the first support (F) enabling to construct a logical information: no support on pallets, or support the right pallet or support the left pallet, and monitoring (G) of the pallets (1) and (2) state in the terminals;
▪ from the first support managing (F), managing of the selected modes (I), namely forward (D) or neutral (N) or reverse (R);
▪ (J) control of the inverter.
